# EUROPÄISCHE PATENTANMELDUNG

(11) **EP 2 537 698 A1**
(43) Veröffentlichungstag der Anmeldung: **26.12.2012**
(21) Anmeldenummer: 12004261.9
(22) Anmeldetag: 05.06.2012
(51) Int. Cl.: B60K 17/10, B60K 17/356, F16H 61/448

(54) **Hydrostatischer Fahrantrieb**

(30) Priorität: 24.06.2011 DE 102011105440
(71) Anmelder: Robert Bosch GmbH, 70442 Stuttgart (DE)
(72) Erfinder: Hoermann, Werner, 89257 Illertissen (DE); Vogl, Karl-Heinz, 88444 Ummendorf (DE); Hermann, Marcus, 89275 Elchingen (DE); Essig, Heinz-Gerhard, 89173 Lonsee (DE)
(74) Vertreter: Thürer, Andreas

(57) **Zusammenfassung**

Offenbart ist ein hydrostatischer Fahrantrieb mit einer Hydropumpe über die zumindest zwei Hydromaschineneinheiten, die jeweils mehrere Gruppen von Arbeitsräumen aufweisen, mit Druckmittel versorgt sind. Jeweils eine Gruppe von Arbeitsräumen der Hydromaschineneinheiten ist dabei eine Kopplungsgruppe. Die Kopplungsgruppen sind über eine Kopplungsleitung miteinander verbunden, so dass die Hydromaschineneinheiten hydraulisch partiell in Reihe geschaltet oder gekoppelt sind. Erfindungsgemäß ist dabei ein Volumen einer der Kopplungsgruppen verstellbar.

## Beschreibung

Die Erfindung betrifft einen hydrostatischen Fahrantrieb gemäß dem Oberbegriff des Patentanspruchs 1.

Hydrostatische Fahrantriebe können mehrere Hydromotoren aufweisen, um mehrere Achsen oder mehrere Räder einzeln antreiben zu können.

Um beim Auftreten mangelnder Traktion ein Durchrutschen eines Rades zu verhindern bzw. eine Synchronisation der Drehzahlen der einzelnen Räder zu erreichen, ist es bekannt Hydromotoren zweier Räder in Reihe zu schalten, d.h. den Druckmittelausgang des ersten Hydromotors mit dem Druckmitteleingang des zweiten Hydromotors über eine Kopplungsleitung zu verbinden. Sind die Schluckvolumina der Hydromotoren gleich, stellt sich an beiden Hydromotoren die gleiche Drehzahl ein, da durch beide Hydromotoren derselbe Druckmittelstrom gefördert wird.

Schlupft beispielsweise ein mit dem ersten Hydromotor verbundenes Rad aufgrund mangelnder Traktion, so wird das an diesem Hydromotor überschüssige Drehmoment über die Kopplungsleitung auf den zweiten Hydromotor übertragen. Der erste Hydromotor "stützt" sich dadurch am zweiten Hydromotor ab, sofern die Traktion am Rad des zweiten Hydromotors dazu ausreicht. Das Drehmoment wird vom schlupfenden Rad auf das Rad mit Traktion übertragen. Mit dieser Lösung geht dem Fahrantrieb vergleichsweise wenig Antriebsmoment aufgrund von Schlupf eines Rades verloren.

Die Reihenschaltung kann als Sperre bezeichnet werden. Im Falle der Quersperre sind die Hydromotoren zweier Räder einer Achse, im Falle der Längssperre die Hydromotoren zweier Räder einer Antriebskette bzw. verschiedener Achsen in Reihe geschaltet. Antriebskonzepte in Reihe geschalteter Hydromotoren haben verglichen mit parallel geschalteten Hydromotoren einen schlechteren Wirkungsgrad. Eine Ursache sind kleinere Druckdifferenzen, die sich an den in Reihe geschalteten Hydromotoren ergeben. Der Druckmitteleingang eines stromaufwärtigen ersten Hydromotors ist mit Hochdruck beaufschlagt, der Druckmittelausgang des stromabwärtigen Hydromotors ist dem Niederdruck zugeordnet. In der Koppelleitung zwischen diesen beiden Hydromotoren stellt sich ein Druck mittleren Niveaus, der sogenannte "Backpressure" ein. In der Folge weisen beide Hydromotoren zwischen ihrem Druckmittelein- und -ausgang verglichen mit der Parallelschaltung eine kleinere Druckdifferenz auf, was zu einem insgesamt kleineren Gesamtdrehmoment des Fahrantriebes führt. Somit ist der Wirkungsgrad des Antriebes gegenüber der Parallelschaltung verringert.

Da stark verschlechterte Traktionsverhältnisse nur vergleichsweise selten beispielsweise im Geländeeinsatz oder im Winter auftreten, ist es vorteilhaft die Antriebsenergie in der Regel auf nur ein Rad oder nur eine Achse zu beschränken und nur im Falle mangelnder Traktion ein weiteres Rad oder eine weitere Achse zuzuschalten.

Dies greift die DE 10 2006 058 802 A1 zur Verbesserung des Gesamtwirkungsgrades auf und zeigt einen hydrostatischen Mehrmotorantrieb mit Einzelhydromotoren, bei der stromabwärtig gelegene in Reihe geschaltete Hydromotoren über eine Umgehungsleitung, eine Ventileinheit und eine Mindestdruckhalteeinrichtung in den Leerlauf schaltbar sind. Die Mindestdruckhalteeinrichtung bewirkt dabei im Leerlauf einen vergleichsweise niedrigen Druck am Druckmitteleingang des stromabwärtigen Hydromotors, so dass dieser nur eine geringe Antriebsleistung aufweist, die gerade so groß ist, dass seine Eigenhemmung überwunden ist. Nachteilig an dieser Lösung ist, dass im Vierradbetrieb weiterhin der Wirkungsgrad verringert ist.

Die EP 1 100 691 B1 zeigt einen hydrostatischen Fahrantrieb mit zwei Hydropumpen und drei oder vier Einzel- oder Doppelhydromotoren. Zur Verbesserung der Geradeausfahrt und zur Synchronisation der Räder bei Schlupf sind die Hydromotoren mittels Kopplungsleitungen in Reihe geschaltet. Die Doppelhydromotoren weisen jeweils zwei Gruppen hydrostatischer Arbeitsräume auf, die mechanisch gekoppelt sind. Jede der Gruppen hat einen Druckmittelein- und -ausgang. Dadurch ist es möglich, das (Schluck-) Volumen der Doppelhydromotoren zu teilen und eine der Gruppen für eine Reihenschaltung und die andere Gruppe für eine Parallelschaltung vorzusehen. Diese Aufteilung der Schluckvolumina wird dazu genutzt, eine hydraulische Quersperre einer Achse oder eine hydraulische Längssperre einer Antriebskette oder eine hydraulische Allradsperre umzusetzen. Nachteilig an dieser Lösung ist, dass zur Versorgung der Hydromotoren zwei Hydropumpen vorgesehen sind und bei Kurvenfahrten aufgrund der Sperren Schlupf auftritt und der Wirkungsgrad verringert ist.

Dem gegenüber liegt der Erfindung die Aufgabe zu Grunde, einen hydrostatischen Fahrantrieb mit erhöhtem Wirkungsgrad zu schaffen.

Diese Aufgabe wird gelöst durch einen hydrostatischen Antrieb mit den Merkmalen des Patentanspruchs 1.

Vorteilhafte Weiterbildungen der Erfindung sind in den Patentansprüchen 2 bis 9 beschrieben.

Der erfindungsgemäße hydrostatische Fahrantrieb hat eine Hydropumpe, über die eine erste Anordnung mit zwei Hydromaschineneinheiten mit Druckmittel versorgt ist. Über jede der Hydromaschineneinheiten ist dabei ein Rad oder eine Achse antreibbar. Die beiden Hydromaschineneinheiten weisen jeweils eine erste und eine zweite Gruppe hydrostatischer Arbeitsräume auf, wobei die erste Gruppe einer Hydromaschineneinheit mit deren zweiter Gruppe mechanisch gekoppelt ist. Jede der Gruppen hat dabei einen Druckmitteleingang und einen Druckmittelausgang. Die Druckmitteleingänge der ersten Gruppen sind einem Hochdruckanschluss der Hydropumpe zugeordnet. Insbesondere können die Druckmitteleingänge mit dem Hochdruckanschluss verbunden sein. Die Druckmittelausgänge dieser ersten Gruppen sind einem Niederdruck zugeordnet. Der Druckmittelausgang der zweiten Gruppe der ersten Hydromaschineneinheit ist mit dem Druckmitteleingang der zweiten Gruppe der zweiten Hydromaschineneinheit über eine erste Kopplungsleitung verbunden oder ist diesem zugeordnet. Durch beide zweiten Gruppen wird im Fahrbetrieb somit etwa derselbe Druckmittelvolumenstrom gefördert.

Die Drehzahlen der beiden Hydromaschineneinheiten sind somit über die erste Kopplungsleitung hydraulisch gekoppelt und können sich nicht mehr unabhängig voneinander einstellen, so dass eine Drehzahlsperre im herkömmlichen Sinne vorgesehen ist. Erfindungsgemäß ist ein Volumen - also je nach Betriebszustand ein Schluck- oder Fördervolumen - einer der beiden zweiten Gruppen verstellbar oder schaltbar, wodurch zwischen der ersten und der zweiten Hydromaschineneinheit bzw. zwischen den von ihnen angetriebenen Rädern bzw. Achsen ein Drehzahlverhältnis oder eine Drehzahldifferenz einstellbar ist.

Dies ist besonders in Fahrsituationen vorteilhaft, in denen definiert eingestellte und zueinander verschiedene Rad- oder Achsdrehzahlen zu einer Minimierung des Schlupfes an Rädern oder Achsen führen. Aufbauend auf der durch die erste Kopplungsleitung realisierten hydraulischen Drehzahlsperre ist somit ein Wirkungsgrad des Fahrantriebes gegenüber dem Stand der Technik weiter und insbesondere auf einfache und kostengünstige Weise erhöht.

Gegenüber demjenigen Stand der Technik mit Einzelhydromotoren, die nur eine Gruppe hydrostatischer Arbeitsräume haben und in Reihe geschaltet sind, besteht zudem der Vorteil, dass nur die zweite der beiden Gruppen der Hydromaschineneinheiten, also lediglich etwa eine Hälfte des Volumens, in einer nachteiligen hydraulischen Reihenschaltung betrieben wird. Die beiden ersten Gruppen können die volle Druckdifferenz zwischen Hochdruck und Niederdruck zur Gewinnung von Antriebsdrehmoment nutzen.

Bevorzugt sind die erste und zweite Hydromaschineneinheit etwa baugleich, so dass eine Auslegung des hydrostatischen Fahrantriebes, dessen Steuerung und Regelung und insbesondere eine gezielte Verstellung des Volumens vereinfacht ist. Besonders bevorzugt ist, wenn die Hydromaschineneinheiten bezüglich der Volumina der Gruppen baugleich sind.

Die Hydropumpe kann konstant oder verstellbar sein.

Der hydrostatische Fahrantrieb kann im geschlossenen oder im offenen Kreis betrieben sein. Im geschlossenen Kreis können die Druckmittelausgänge der ersten Gruppen, die dem Niederdruck zugeordnet sind, mit einem Niederdruckanschluss der Hydropumpe verbunden sein. Im offenen Kreis können diese Druckmittelausgänge mit einem Tank verbunden sein.

In einer besonders bevorzugten Weiterbildung des hydrostatischen Fahrantriebes ist das Volumen in Abhängigkeit eines Lenkwinkels verstellbar. Treibt beispielsweise die erste Hydromaschineneinheit ein rechtes Rad und die zweite Hydromaschineneinheit ein linkes Rad an, und ist die Fahrsituation des Fahrantriebes eine Linkskurve, so kann der Schlupf in bekannter Weise minimiert werden, wenn das rechte Rad mit höherer Drehzahl als das linke Rad dreht. Dies wird erfindungsgemäß erreicht, indem das Volumen der zweiten Gruppe der ersten Hydromaschineneinheit (rechtes Rad) kleiner oder das Volumen der der zweiten Gruppe der zweiten Hydromaschineneinheit (linkes Rad) größer gestellt wird. Bei gleichbleibendem Druckmittelstrom der zweiten Gruppen stellt sich dadurch eine erhöhte Drehzahl am rechten kurvenäußeren Rad oder eine verringerte Drehzahl am linken kurveninneren Rad und damit ein Drehzahlverhältnis ein. Die erste Kopplungsleitung in Verbindung mit dem verstellbaren Volumen einer zweiten Gruppe bildet somit ein hydraulisches Sperrdifferential aus. Ein Drehzahlverhältnis bzw. einen Sperrwert in Abhängigkeit des Lenkwinkels einzustellen stellt dabei gegenüber herkömmlichen mechanischen Sperrdifferentialen eine Neuerung und einen großen Vorteil dar.

In einer bevorzugten Weiterbildung ist eine Hydromaschineneinheit eine Axialkolbenmaschineneinheit in Schrägscheiben-, Schrägachsen- oder Floating/Tilting-Cup-Bauweise. Eine Verstellung des Volumens erfolgt bei diesen Axialkolbenmaschinen über die Verstellung eines Schwenkwinkels einer Schrägscheibe oder einer Schrägachse.

Die Hydromaschineneinheit weist bevorzugt zwei Hydromaschinen mit jeweils einer Gruppe hydrostatischer Arbeitsräume auf, wobei die beiden Hydromaschinen über eine Welle mechanisch gekoppelt sind. Alternativ dazu ist sie bevorzugt als eine Doppelmaschine oder als eine Zweikreismaschine ausgeführt. Eine Doppelaxialkolbenmaschine in Schrägscheibenbauweise hat beispielsweise zwei über eine Welle mechanisch gekoppelte bzw. drehfest verbundene Zylindertrommeln, in denen jeweils eine der beiden Gruppen hydrostatischer Arbeitsräume ausgebildet ist. Typischerweise sind die Zylindertrommeln back-to-back angeordnet, so dass sich die Hubbewegungen der beiden Gruppen gegenseitig kompensieren und eine Vibration minimiert ist. Bei einer Zweikreisaxialkolbenmaschine in Schrägachsenbauweise sind beispielsweise beide Gruppen innerhalb einer Zylindertrommel angeordnet, wobei die Druckmitteleingänge und - ausgänge der beiden Gruppen auf Kreisen verschiedenen Durchmessers angeordnet sind (vgl. hierzu die Offenlegungsschrift der Anmelderin DE 10 2008 062 293 A1).

Bei einer ersten bevorzugten und vorteilhaften weitergebildeten Variante ist der Druckmittelausgang der zweiten Gruppe der zweiten Hydromaschineneinheit mit dem Druckmitteleingang der zweiten Gruppe der ersten Hydromaschineneinheit über eine zweite Kopplungsleitung verbunden, wodurch eine besonders starre hydraulische Kopplung ausgebildet ist. Unabhängig davon welches der Räder bzw. welche Hydromaschineneinheit aufgrund von Schlupf eine Tendenz hat vor- oder nachzueilen, stützen sich die beiden Hydromaschineneinheiten auf diese Weise immer über Druckkräfte ab. Ein Kavitationsrisiko aufgrund von Saugwirkung beim Voreilen der zweiten Hydromaschineneinheit wie es bei Verwendung von nur einer Kopplungsleitung besteht, ist so minimiert.

Bei einer alternativen bevorzugten und vorteilhaften weitergebildeten Variante des hydrostatischen Fahrantriebs ist auch der Druckmitteleingang der zweiten Gruppe der ersten Hydromaschineneinheit dem Hochdruck zugeordnet, und weiterhin ist auch der Druckmittelausgang der zweiten Gruppe der zweiten Hydromaschineneinheit dem Niederdruck zugeordnet. Den beiden ersten Gruppen stehen somit die große Druckdifferenz zwischen Hoch- und Niederdruck zur Gewinnung von Antriebsmoment zur Verfügung, so dass sie mit hohem Wirkungsgrad arbeiten können. Der zweiten Gruppe der ersten Hydromaschineneinheit steht die Differenz zwischen Hochdruck und einem Druck in der ersten Kopplungsleitung und der zweiten Gruppe der zweiten Hydromaschineneinheit steht die Differenz zwischen dem Druck in der ersten Kopplungsleitung und dem Niederdruck zur Gewinnung von Antriebsmoment zur Verfügung.

Bevorzugte Weiterbildungen dieser beiden Varianten des hydrostatischen Fahrantriebes weisen eine zweite über die Hydropumpe versorgte Anordnung auf, die der ersten oben beschriebenen Anordnung im Wesentlichen entspricht und zu dieser hydraulisch parallel geschaltet ist. Auf diese Weise sind beispielsweise vier Räder antreibbar. Im Falle der ersten Variante sind so beispielsweise die Räder zweier Achsen antreibbar, wobei die zwei Hydromaschineneinheiten jeder Achse über die Kopplungsleitungen gemäß dem hydraulischen Sperrdifferential mit verstellbarem Sperrwert gekoppelt sind. Im Falle der alternativen Variante sind mit der Doppelung der Anordnung beispielsweise die beiden Räder jeder Seite des Fahrantriebes über jeweils eine erste Kopplungsleitung gemäß einer hydraulischen Längssperre mit verstellbarem Sperrwert gekoppelt.

In einer vorteilhaften Weiterbildung des hydrostatischen Fahrantriebes ist die erste und /oder die zweite Kopplungsleitung mit einer Speiseleitung verbunden, die mit einer Speisepumpe verbindbar ist, und in der ein Druckbegrenzungsventil und / oder ein zur Kopplungsleitung öffnendes Sperrventil angeordnet ist. Das Druckbegrenzungsventil dient dabei zur Absicherung des Druckes in der Kopplungsleitung, das Sperrventil ermöglicht einen Ausgleich von Leckageverlusten in der Kopplungsleitung mit Hilfe der Speisepumpe. Das Sperrventil kann dabei als Rückschlagventil mit oder ohne Federvorspannung ausgeführt sein.

Eine besonders kompakte Bauweise ergibt sich, wenn das Druckbegrenzungsventil und das Sperrventil in einem gemeinsamen Ventilblock integriert sind. In diesen Block kann für weitere Steuerungsfunktionen weiterhin zumindest ein Wegeventil integriert sein.

Im Folgenden werden zwei Ausführungsbeispiele eines erfindungsgemäßen hydrostatischen Fahrantriebes anhand von drei schematischen Zeichnungen näher erläutert. Es zeigen:
Figur 1 ein erstes Ausführungsbeispiel eines hydrostatischen Fahrantriebes mit einem verstellbaren hydrostatischen Sperrdifferential; und
Figur 2 ein zweites Ausführungsbeispiel eines hydrostatischen Fahrantriebes mit einer verstellbaren hydrostatischen Längssperre.

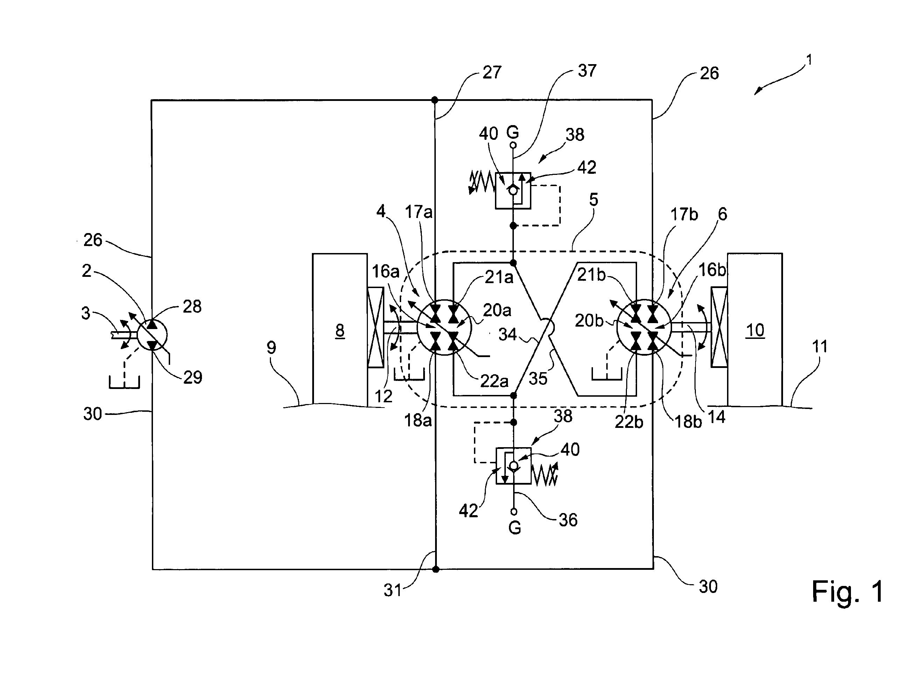

Figur 1 zeigt ein erstes Ausführungsbeispiel eines hydrostatischen Fahrantriebes 1 mit einem verstellbaren hydrostatischen Sperrdifferential.

Der hydrostatische Fahrantrieb 1 hat eine verstellbare Hydropumpe 2 und eine erste Anordnung, die eine erste und eine zweite Hydromaschineneinheit 4, 6 hat. Die beiden Hydromaschineneinheiten 4, 6 sind über die Hydropumpe 2 mit Druckmittel versorgt. Die Hydropumpe 2 ist über einen nicht dargestellten Verbrennungsmotor über eine Welle 3 in zwei möglichen Drehrichtungen angetrieben. Durch einen Wechsel der Drehrichtung kann von einer Vorwärtsfahrt auf eine Rückwärtsfahrt umgeschaltet werden. Die Hydromaschineneinheiten 4, 6 sind jeweils über eine Welle 12, 14 mit einem Rad 8, 10 verbunden und treiben dieses an. Die Räder 8, 10 bilden zusammen eine Achse des hydrostatischen Fahrantriebes 1.

Die beiden Hydromaschineneinheiten 4, 6 sind als verstellbare Zweikreisaxialkolbenmaschinen in Schrägachsenbauweise ausgeführt und weisen daher eine erste Gruppe hydrostatischer Arbeitsräume 16a, 16b, und eine mit dieser mechanisch gekoppelte zweite Gruppe hydrostatischer Arbeitsräume 20a, 20b auf. Eine Verstellung eines Volumens der zweiten Gruppe 20a der ersten Hydromaschineneinheit 4 kann dabei unabhängig von einer Verstellung des Volumens der zweiten Gruppe 20b der zweiten Hydromaschineneinheit 6 erfolgen, und umgekehrt. Die Verstellung erfolgt dabei über eine Änderung eines Schwenkwinkels einer Triebwelle der Hydromaschineneinheiten 4 bzw. 6. Bei beiden Hydromaschineneinheiten 4, 6 ist an diese Verstellung eine Verstellung des Volumens der ersten Gruppe 16a, 16b gekoppelt. Da der Aufbau und die Funktionsweise einer Zweikreisaxialkolbenmaschine allgemein bekannt sind, wird an dieser Stelle auf eine tiefer gehende Beschreibung des Maschinentyps verzichtet. Stattdessen wird auf die Offenlegungsschrift DE 10 2008 062 295 A1 der Anmelderin verwiesen, in der mehrere Ausführungsbeispiele von Zweikreisaxialkolbenmotoren in Schrägachsenbauweise gezeigt sind.

Die Gruppen 16a, 16b, 20a, 20b haben Druckmitteleingänge 17a, 17b, 21a, 21b und Druckmittelausgänge 18a, 18b, 22a, 22b. Diese können Nieren in einer Steuerscheibe sein. Über eine Hochdruckleitung 26 ist ein Hochdruckanschluss 28 der Hydropumpe 2 mit dem Druckmitteleingang 17b der ersten Gruppe 16b der zweiten Hydromaschineneinheit 6 verbunden. Über eine Hochdruckleitung 27 ist die Hochdruckleitung 26 mit dem Druckmitteleingang 17a der ersten Gruppe 16a der ersten Hydromaschineneinheit 4 verbunden. Die beiden Druckmitteleingänge 17a, 17b sind somit parallel zueinander mit Druckmittel versorgt. Über eine Niederdruckleitung 30 ist ein Niederdruckanschluss 29 der Hydropumpe 2 mit dem Druckmittelausgang 18b der ersten Gruppe 16b der zweiten Hydromaschineneinheit 6 verbunden. Über eine Niederdruckleitung 31 ist die Niederdruckleitung 30 mit dem Druckmittelausgang 18a der ersten Gruppe 16a der ersten Hydromaschineneinheit 4 verbunden. Die Hydropumpe 2 arbeitet somit im geschlossenen Kreislauf der Hochdruckleitungen 26, 27 und der Niederdruckleitungen 30,31.

In Figur 1 zwischen den beiden Rädern 8, 10 ist ein geschlossener hydraulischer Kopplungskreis der beiden zweiten Gruppen 20a, 20b dargestellt, über den die beiden Hydromaschineneinheiten 4, 6 hydraulisch gekoppelt sind. Dabei ist der Druckmittelausgang 22a der zweiten Gruppe 20a der ersten Hydromaschineneinheit 4 über eine erste Kopplungsleitung 34 mit dem Druckmitteleingang 21b der zweiten Gruppe 20b der zweiten Hydromaschineneinheit 6 verbunden. Um den Kopplungskreis zu schließen, ist der Druckmittelausgang 22b der zweiten Gruppe 20b der zweiten Hydromaschineneinheit 6 über eine zweite Kopplungsleitung 35 mit dem Druckmitteleingang 21a der zweiten Gruppe 20a der ersten Hydromaschineneinheit 4 verbunden.

Beide Kopplungsleitungen 34, 35 sind über eine Speiseleitung 36, 37 zum Ausgleich von Leckageverlusten mit einer nicht dargestellten Speisepumpe oder zur Entleerung bzw. zur Absicherung eines zulässigen Höchstdruckes mit einem nicht dargestellten Tank verbindbar. In den Speiseleitungen 36, 37 ist zu diesem Zweck jeweils ein Ventilblock 38 angeordnet, in den ein zur jeweiligen Kopplungsleitung 34, 35 hin öffnendes als Rückschlagventil ausgeführtes Sperrventil 40 und ein Druckbegrenzungsventil 42 mit einstellbarem Druckwert integriert ist.

In einem vorwärts und geradeaus gerichteten Fahrbetrieb beaufschlagt die Hydropumpe 2 über die beiden Hochdruckleitungen 26, 27 die beiden ersten Gruppen 16a, 16b über deren Druckmitteleingänge 17a, 17b mit Druckmittel. Der Druck an den Druckmitteleingängen 17a, 17b beträgt 400bar. Aufgrund der Druckdifferenz zwischen den Hochdruckleitungen 26, 27 und den Niederdruckleitungen 30, 31 wird ein Antriebsmoment über die beiden Wellen 12, 14 an die Räder 8, 10 übertragen. Haben diese genügend Traktion auf einem Untergrund 9, 11, so liegt kein Schlupf vor.

Während des schlupffreien Fahrbetriebes werden die beiden zweiten Gruppen 20a, 20b aufgrund ihrer mechanischen Kopplung von den beiden ersten Gruppen 16a, 16b angetrieben. Es ergibt sich eine geschlossene umlaufende Druckmittelströmung in den beiden Kopplungsleitungen 34, 35. Bei Leckageverlusten dieses Kreislaufes öffnet eins der Sperrventile 40 und über die Speisepumpe wird Druckmittel in der ersten 34 oder zweiten Kopplungsleitung 35 ergänzt bis das Sperrventil 40 wieder schließt.

Reicht nun beispielsweise eine Traktion des Rades 8 auf dem Untergrund 9 bei gegebenem Antriebsmoment der Welle 12 nicht mehr aus, beginnt das in Figur 1 linke Rad 8 zu schlupfen, so dass in Abhängigkeit der dann wirkenden Gleitreibung zwischen dem Rad 8 und dem Untergrund 9 nur noch ein Teil des an der Welle 12 wirkenden Drehmomentes auf den Untergrund 9 übertragen werden kann. Wären die Hydromaschineneinheiten 4 und 6 nicht über die erste Kopplungsleitung 34 hydraulisch gekoppelt, würde zu diesem Zeitpunkt das Rad 8 unter anhaltendem Schlupf beschleunigen und das Antriebsmoment an der Welle 12 würde dem hydrostatischen Fahrantrieb 1 ungenutzt verloren gehen. Zusätzlich würde aufgrund der parallelen Schaltung der beiden Druckmitteleingänge 17a und 17b der ersten Gruppen 16a, 16b dem zweiten Rad 10 Druckmittel bzw. Antriebsmoment entzogen, so dass ein vom Fahrantrieb 1 angetriebenes Fahrzeug zum Stillstand kommen kann.

Da die erste und zweite Gruppe 16a und 20a der ersten Hydromaschineneinheit 4 mechanisch gekoppelt sind, wird jedoch dieses Antriebsmoment von der ersten Gruppe 16a an die zweite Gruppe 20a und von dieser unter Wandlung in hydrostatischen Druck an das Druckmittel der ersten Kopplungsleitung 34 übertragen. In der Kopplungsleitung 34 steigt dabei der Druck entsprechend dem übertragenen Drehmoment an. Weiterhin wird der Druck in der zweiten Gruppe 20b wieder in Drehmoment gewandelt und an die erste Gruppe hydrostatischer Arbeitsräume 16b der zweiten Hydromaschineneinheit 6 und von dieser an die Welle 14 und an das Rad 10 übertragen. Auf diese Weise ist die erste Hydromaschineneinheit 4 an der zweiten Hydromaschineneinheit 6 hydraulisch "abgestützt". Ist die Traktion des Rades 10 auf dem Untergrund 11 ausreichend, kann so das überschüssige Antriebsdrehmoment des schlupfenden Rades 8 auf das Rad 10 übertragen werden und dem hydrostatischen Fahrantrieb geht - abgesehen von Verlusten im hydraulischen Kreislauf der Kopplungsleitungen 34, 35 - kein Antriebsmoment verloren.

Die Kopplungsleitungen 34, 35 stellen auf diese Weise eine hydraulische Quersperre zwischen den beiden Rädern 8, 10 dar und sorgen insbesondere bei Schlupf für eine Synchronisierung der Drehzahlen der beiden Räder 8, 10 und für die Übertragung von Drehmomenten zwischen den Rädern 8, 10.

Im Falle einer Kurvenfahrt, beispielsweise in einer Linkskurve, wäre eine Quersperre, die für eine Angleichung der Drehzahlen der Räder 8, 10 sorgt, für den Wirkungsgrad des hydrostatischen Fahrantriebes 1 nachteilig. Vielmehr ist von Vorteil das kurvenäußere Rad, in diesem Fall das Rad 10, über ein Differential zu beschleunigen. Diese Funktionalität eines Sperrdifferentials, über das zum Einen Drehzahlen der Räder 8, 10 wie geschildert synchronisierbar und Drehmomente übertragbar sind und zum Anderen ein Drehzahlverhältnis eines kurvenäußeren zu einem kurveninneren Rad einstellbar ist, ist über die Kopplungsleitungen 34, 35 in Kombination mit der erfindungsgemäßen Verstellbarkeit des Volumens von einer der zweiten Gruppen 20a, 20b erfüllt.

Je enger die Linkskurve ist, umso größer muss eine Drehzahldifferenz zwischen dem rechten Rad 10 und dem linken Rad 8 sein. Da durch beide zweiten Gruppen 20a, 20b der Hydromaschineneinheiten 4, 6 - abgesehen von kleinen Leckageverlusten - der gleiche Druckmittelvolumenstrom gefördert wird, führen voneinander verschiedene Volumina der zweiten Gruppen 20a, 20b zu unterschiedlichen Drehzahlen der Hydromaschineneinheiten 4, 6 bzw. der Räder 8, 10. Für den beispielhaften Fall einer Linkskurve wird das Volumen der zweiten Gruppe 20b der Hydromaschineneinheit 6 des rechten Rades 10 zur Erhöhung von dessen Drehzahl verkleinert. Die Verstellung des Volumens erfolgt dabei durch die Verstellung des Schwenkwinkels der Hydromaschineneinheit 6 mit Hilfe eines Lenkwinkelsensors und einer Steuereinheit in Abhängigkeit des Lenkwinkels.

Bei einer Kurvenfahrt kann eine Sperrwirkung des hydraulischen Sperrdifferentials somit exakt an den Lenkwinkel bzw. den Kurvenradius angepasst werden. Eine derartige an die Kurvenfahrt angepasste Differentialsperrwirkung ist auf diese Weise gegenüber mechanischen Sperrdifferentialen vorrichtungstechnisch besonders einfach umgesetzt.

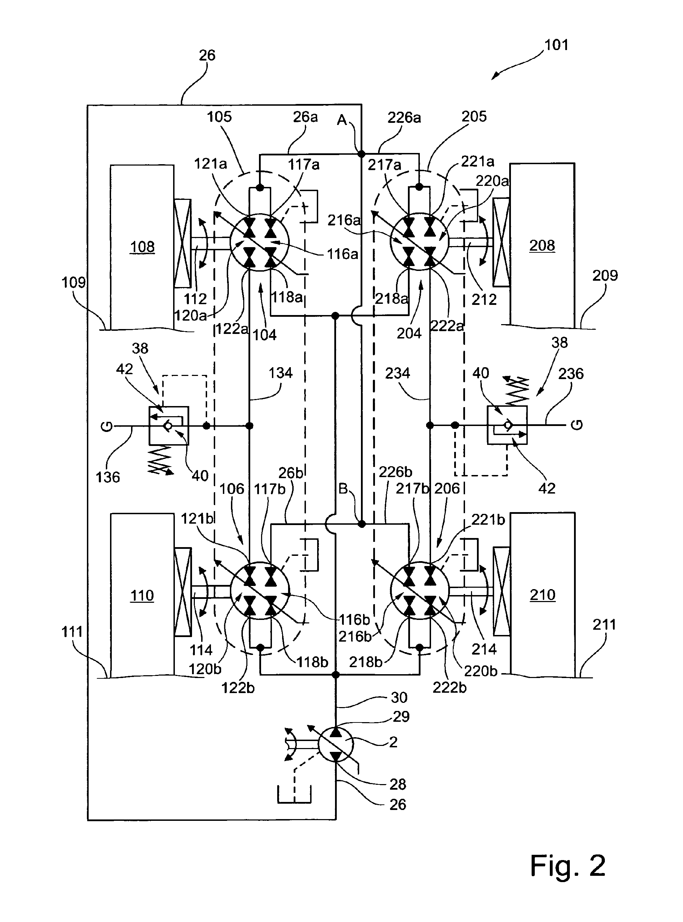

Figur 2 zeigt ein zweites Ausführungsbeispiel eines hydrostatischen Fahrantriebes 101 mit einer verstellbaren hydrostatischen Längssperre und einer Differentialfunktion. Die Beschreibung des zweiten Ausführungsbeispiels konzentriert sich dabei auf vom ersten Ausführungsbeispiel gemäß Figur 1 abweichende Merkmale.

Die verstellbare Hydropumpe 2 des hydrostatischen Fahrantriebes 101 versorgt vier Hydromaschineneinheiten 104, 106, 204, 206 mit Druckmittel, wobei die beiden Hydromaschineneinheiten 104, 106 einer ersten und die beiden anderen Hydromaschineneinheiten 204, 206 einer zweiten Anordnung zugeordnet sind. Die Hydromaschineneinheiten 104, 106, 204, 206 sind jeweils über eine Welle 112, 114, 212, 214 mit Rädern 108, 110, 208, 210 verbunden und treiben diese an.

Die Hydromaschineneinheiten 104, 106, 204, 206 sind als verstellbare Zweikreisaxialkolbenmaschinen in Schrägachsenbauweise ausgeführt und weisen eine erste Gruppe hydrostatischer Arbeitsräume 116a, 116b, 216a, 216b und eine mit dieser mechanisch gekoppelte zweite Gruppe hydrostatischer Arbeitsräume 120a, 120b, 220a, 220b auf. Die Gruppen 116a, 116b, 216a, 216b, 120a, 120b, 220a, 220b haben Druckmitteleingänge 117a, 117b, 217a, 217b, 121a, 121b, 221a, 221b und Druckmittelausgänge 118a, 118b, 218a, 218b, 122a, 122b, 222a, 222b.

Die Hochdruckleitung 26 verzweigt sich in Abschnitte 26a, 226a zur Versorgung der ersten und zweiten Gruppen 116a, 216a, 120a, 220a der in Figur 2 oberen Hydromaschineneinheiten 104 und 204, und in Abschnitte 26b, 226b zur Versorgung der ersten Gruppen 116b, 216b der in Figur 2 unteren Hydromaschineneinheiten 106 und 206.

Somit sind alle Druckmitteleingänge 117a, 217a, 121a, 221a der beiden in Figur 2 oberen Hydromaschineneinheiten 104, 204 und die Druckmitteleingänge 117b, 217b der ersten Gruppen 116b, 216b der beiden unteren Hydromaschineneinheiten 106, 206 parallel zueinander mit Druckmittel bei 400 bar versorgt.

Über eine Niederdruckleitung 30 ist ein Niederdruckanschluss 29 der Hydropumpe 2 mit Druckmittelausgängen 118a, 218a der ersten Gruppen 116a, 216a der beiden in Figur 2 oberen Hydromaschineneinheiten 104, 204 und mit Druckmittelausgängen 118b, 218b, 122b, 222b der ersten und zweiten Gruppen 116b, 216b, 120b, 220b der beiden unteren Hydromaschineneinheiten 110, 210 verbunden.

In Figur 2 zwischen den beiden zweiten Gruppen 120a, 120b der beiden in Figur 2 linken Hydromaschineneinheiten 104, 106 ist eine erste Kopplungsleitung 134 dargestellt. Über sie ist der Druckmittelausgang 122a der zweiten Gruppe 120a der Hydromaschineneinheit 104 mit dem Druckmitteleingang 121b der zweiten Gruppe 120b der Hydromaschineneinheit 106 verbunden. Auf diese Weise sind die beiden Hydromaschineneinheiten 104 und 106 hydraulisch gekoppelt. Über eine weitere erste Kopplungsleitung 234 ist der Druckmittelausgang 222a der zweiten Gruppe 220a der Hydromaschineneinheit 204 mit dem Druckmitteleingang 221b der zweiten Gruppe 220b der Hydromaschineneinheit 206 verbunden. Auf diese Weise sind die beiden Hydromaschineneinheiten 204 und 206 hydraulisch gekoppelt.

Die Kopplungsleitungen 134, 234 sind über Speiseleitungen 136, 236 zum Ausgleich von Leckageverlusten mit einer nicht dargestellten Speisepumpe oder zur Entleerung bzw. zur Absicherung eines zulässigen Höchstdruckes in den Kopplungsleitungen 134, 234 mit einem nicht dargestellten Tank verbindbar. In den Speiseleitungen 134, 234 ist zu diesem Zweck jeweils ein Ventilblock 38 angeordnet, in den ein zur jeweiligen Kopplungsleitung 134, 234 hin öffnendes Sperrventil 40 und ein verstellbares Druckbegrenzungsventil 42 integriert ist.

In einem vorwärts und geradeaus gerichteten Fahrbetrieb beaufschlagt die Hydropumpe 2 über die Abschnitte 26a und 226a der Hochdruckleitungen 26 die ersten und zweiten Gruppen 116a, 216a, 120a, 220a der beiden in Figur 2 oberen Hydromaschineneinheiten 104, 204, sowie über die Abschnitte 26b, 226b die ersten Gruppen 116b, 216b der beiden in Figur 2 unteren Hydromaschineneinheiten 110, 210 mit Druckmittel von 400 bar. Da alle ersten Gruppen 116a, 216a, 116b, 216b über die Niederdruckleitung 30 direkt mit dem Niederdruckanschluss 29 der Hydropumpe 2 verbunden sind, ergibt sich über diese Gruppen 116a, 216a, 116b, 216b ein für einen Wirkungsgrad des hydrostatischen Fahrantriebes 101 vorteilhafter maximaler Druckabfall bzw. ein maximales Drehmoment.

Über die zweiten Gruppen 120a, 120b, 220a, 220b ergibt sich aufgrund der Reihenschaltung kein derart großer Druckabfall. Somit tragen die zweiten Gruppen 120a, 120b, 220a, 220b weniger zum Gesamtantriebsmoment des hydrostatischen Fahrantriebes 101 bei als die ersten Gruppen 116a, 216a, 116b, 216b.

Es ergibt sich ein Antriebsmoment an den Wellen 112, 212, 114, 214 bzw. an den Rädern 108, 208, 110, 210. Haben diese genügend Traktion auf einem Untergrund 109, 209, 111, 211 so liegt kein Schlupf vor.

Reicht nun beispielsweise eine Traktion des Rades 108 auf dem Untergrund 109 bei gegebenem Antriebsmoment der Welle 112 nicht mehr aus, beginnt das in Figur 2 linke obere Rad 108 zu schlupfen, so dass in Abhängigkeit der dann wirkenden Gleitreibung zwischen dem Rad 108 und dem Untergrund 109 nur noch ein Bruchteil des an der Welle 112 wirkenden Drehmomentes auf den Untergrund 109 übertragen werden kann. Wären die Hydromaschineneinheiten 104 und 106 nicht über die erste Kopplungsleitung 134 hydraulisch gekoppelt, würde zu diesem Zeitpunkt das Rad 108 unter anhaltendem Schlupf beschleunigen und das Antriebsmoment an der Welle 112 würde dem hydrostatischen Fahrantrieb 101 ungenutzt verloren gehen. Zusätzlich würden aufgrund der parallelen Schaltung der Druckmitteleingänge 217a, 117b, 217b der ersten Gruppen hydrostatischer Arbeitsräume 216a, 116b, 216b den anderen Rädern 208, 110, 210 Druckmittel bzw. Antriebsmoment entzogen, so dass ein Fahrzeug ggf. zum Stillstand käme.

Stattdessen steigt in der Kopplungsleitung 134 der Druck entsprechend dem aufgrund des Schlupfes freigewordenen Drehmomentes an. Weiterhin wird der Druck in der zweiten Gruppe 120b der in Figur 2 linken unteren Hydromaschineneinheit 106 wieder in Drehmoment gewandelt. Ist die Traktion des Rades 110 auf dem Untergrund 111 ausreichend, so kann das überschüssige Antriebsdrehmoment des schlupfenden Rades 108 auf das Rad 110 übertragen werden und dem hydrostatischen Fahrantrieb 101 geht - abgesehen von Verlusten im hydraulischen Kreislauf - kein Antriebsmoment verloren. Analoges gilt beim Schlupf des in Figur 2 rechten oberen Rades 208.

Auf diese Weise stellt die Kopplungsleitung 134 für die beiden in Figur 2 linken Räder 108, 110, und die Kopplungsleitung 234 für die beiden in Figur 2 rechten Räder 208, 210, eine hydraulische Längssperre dar. Über die Verstellbarkeit der Volumina der zweiten Gruppen 120a, 220a, 12b, 220b können Drehzahlverhältnisse der Räder 108, 208, 110, 210, beispielsweise in Abhängigkeit eines Lenkwinkels, eingestellt werden.

Es ist ersichtlich, dass in Abhängigkeit davon welches der Räder gerade schlupft, Traktion hat oder voreilt oder nacheilt, die zweiten Gruppen der Hydromaschineneinheiten zeitweise im Motor- und zeitweise im Pumpenbetrieb arbeiten. Aus diesem Grund wurden die Hydromaschineneinheiten in diesem Dokument nicht als Hydromotoren bezeichnet.

Abweichend von den gezeigten Ausführungsbeispielen kann der hydrostatische Fahrantrieb ebenso im offenen Kreislauf betrieben werden.

Abweichend kann die Hydropumpe eine Konstantpumpe sein. Sie kann weiterhin durchschwenkbar ausgeführt sein.

Abweichend von den gezeigten können die gezeigten Sperrventile können federvorgespannt ausgeführt sein. Um eine Reihenschaltung der zweiten Gruppen zu unterbrechen bzw. kann ein Bypass zum Druckmitteleingang einer zweiten Gruppe ausgebildet sein. Dazu kann das Sperrventil beispielsweise als vorgespanntes Rückschlagventil ausgeführt sein, das ab einem definierten Höchstdruck in der Kopplungsleitung zum Tank oder zu einem anderen Niederdruck hin öffnet.

Abweichend vom gezeigten Ventilblock können die Sperr- und Druckbegrenzungsventile einzeln angeordnet sein. In den Ventilblock können weitere Ventilfunktionen, beispielsweise Wegeventile zur Steuerung des Leckage- oder Speisestromes, integriert sein. Die Hydromaschineneinheiten können mehr als zwei Gruppen hydrostatischer Arbeitsräume aufweisen, so dass zumindest zwei Hydromaschineneinheiten mit einer Hydromaschineneinheit hydraulisch koppelbar sind.

Offenbart ist ein hydrostatischer Fahrantrieb mit einer Hydropumpe über die zumindest zwei Hydromaschineneinheiten, die jeweils mehrere Gruppen von Arbeitsräumen aufweisen, mit Druckmittel versorgt sind. Jeweils eine Gruppe von Arbeitsräumen der Hydromaschineneinheiten ist dabei eine Kopplungsgruppe. Die Kopplungsgruppen sind über eine Kopplungsleitung miteinander verbunden, so dass die Hydromaschineneinheiten hydraulisch partiell in Reihe geschaltet oder gekoppelt sind. Erfindungsgemäß ist dabei ein Volumen einer der Kopplungsgruppen verstellbar.

## Patentansprüche

1. Hydrostatischer Fahrantrieb mit einer Hydropumpe (2), über die eine erste Anordnung (5; 105) mit zwei Hydromaschineneinheiten (4, 6; 104, 106) mit Druckmittel versorgt ist, wobei über jede Hydromaschineneinheit (4, 6; 104, 106) ein Rad (8, 10; 108, 110) antreibbar ist, und wobei beide Hydromaschineneinheiten (4, 6; 104, 106) jeweils eine erste Gruppe hydrostatischer Arbeitsräume (16a, 16b; 116a, 116b) und eine zweite Gruppe hydrostatischer Arbeitsräume (20a, 20b; 120a, 120b) haben, und wobei die erste Gruppe hydrostatischer Arbeitsräume (16a, 16b; 116a, 116b) der Hydromaschineneinheit (4, 6; 104, 106) mit deren zweiten Gruppe (20a, 20b; 120a, 120b) mechanisch gekoppelt ist, und wobei die Gruppen (16a, 16b, 20a, 20b; 116a, 116b, 120a, 120b) jeweils einen Druckmitteleingang (17a, 17b, 21a, 21b; 117a, 117b, 121a, 121b) und einen Druckmittelausgang (18a, 18b, 22a, 22b; 118a, 118b, 122a, 122b) haben, und wobei den Druckmitteleingängen (17a, 17b; 117a, 117b) der ersten Gruppen (16a, 16b; 116a, 116b) ein Hochdruckanschluss (28) der Hydropumpe (2) und den Druckmittelausgängen (18a, 18b; 118a, 118b) dieser ersten Gruppen (16a, 16b; 116a, 116b) ein Niederdruck zugeordnet ist, und wobei der Druckmittelausgang (22a; 122a) der zweiten Gruppe (20a; 120a) der ersten Hydromaschineneinheit (4; 104) mit dem Druckmitteleingang (21b; 121b) der zweiten Gruppe (20b; 120b) der zweiten Hydromaschineneinheit (6; 106) über eine erste Kopplungsleitung (34; 134) verbunden ist, **dadurch gekennzeichnet, dass** ein Volumen einer der beiden zweiten Gruppen (20a, 20b; 120a, 120b) verstellbar oder schaltbar ist.

2. Hydrostatischer Fahrantrieb nach Patentanspruch 1, wobei das Volumen in Abhängigkeit eines Lenkwinkels verstellbar ist.

3. Hydrostatischer Fahrantrieb nach einem der Patentansprüche 1 oder 2, wobei die Hydromaschineneinheit (4, 6; 104, 106, 204, 206) eine Axialkolbenmaschineneinheit ist.

4. Hydrostatischer Fahrantrieb nach einem der vorhergehenden Patentansprüche, wobei die Hydromaschineneinheit (4, 6; 104, 106, 204, 206) zwei Hydromaschinen mit jeweils einer Gruppe aufweist, oder wobei die Hydromaschineneinheit als Doppelmaschine oder als Zweikreismaschine (4, 6; 104, 106, 204, 206) ausgeführt ist.

5. Hydrostatischer Fahrantrieb nach einem der vorhergehenden Patentansprüche, wobei der Druckmittelausgang (22b) der zweiten Gruppe (20b) der zweiten Hydromaschineneinheit (6) mit dem Druckmitteleingang (21 a) der zweiten Gruppe (20a) der ersten Hydromaschineneinheit (4) über eine zweite Kopplungsleitung (35) verbunden ist.

6. Hydrostatischer Fahrantrieb nach einem der Patentansprüche 1 bis 4, wobei der Druckmitteleingang (121 a) der zweiten Gruppe (120a) der ersten Hydromaschineneinheit (104) dem Hochdruck zugeordnet ist, und wobei der Druckmittelausgang (122b) der zweiten Gruppe (120b) der zweiten Hydromaschineneinheit (106) dem Niederdruck zugeordnet ist.

7. Hydrostatischer Fahrantrieb nach Patentanspruch 5 oder 6, wobei über die Hydropumpe (2) eine zweite Anordnung (205) versorgt ist, die der ersten Anordnung (105) im Wesentlichen entspricht.

8. Hydrostatischer Fahrantrieb nach einem der vorhergehenden Patentansprüche, wobei die Kopplungsleitung (34, 35; 134, 135) mit einer Speiseleitung (36, 37; 136, 236) verbunden ist, in der ein Druckbegrenzungsventil (42) oder ein Sperrventil (40) angeordnet ist.

9. Hydrostatischer Fahrantrieb nach Patentanspruch 8, wobei das Druckbegrenzungsventil (42) und das Sperrventil (40) in einen Ventilblock (38) integriert sind.
